# EUROPEAN PATENT APPLICATION

(11) **EP 1 591 178 A1**
(43) Date of publication of application: **02.11.2005**
(21) Application number: 04253525.2
(22) Date of filing: 14.06.2004
(51) Int. Cl.: B22F 9/22

(54) **Production of active nickel powder and transformation thereof into nickel carbonyl**

(30) Priority: 27.04.2004 WO PCT/CA20/04000620
(71) Applicant: Falconbridge Limited, Toronto Ontario M5J 2V4 (CA)
(72) Inventor: Collins, Michael, Ontario P3E 5P2 (CA); Kuula, Sandra Marie, Ontario P3N 1H9 (CA)
(74) Representative: W.P. Thompson & Co.

(57) **Abstract**

Active nickel powder is produced by reducing a feed material, containing one or more reducible nickel salts, such that when nickel chloride is present, the weight ratio of chloride to total nickel is greater than 0.1 and the reducible nickel salts have a surface area in excess of 1 m²/g, with a reducing gas containing preferably at least 20 volume per cent hydrogen, at a temperature preferably between 300°C and 600°C, and when nickel chloride is not present, by adding hydrogen chloride directly to the reducing gas. The resulting active nickel powder can be rapidly converted into nickel carbonyl by reaction with a gas containing carbon monoxide preferably at atmospheric or super-atmospheric pressure, in the absence of conventional carbonylation catalysts.

## Description

### FIELD OF THE INVENTION

This invention relates to the production of an active nickel metal powder suitable for transformation into nickel carbonyl. Moreover, it relates to the transformation of the active powder into nickel carbonyl by reaction with carbon monoxide at atmospheric or super-atmospheric pressure, in the absence of conventional carbonylation catalysts.

### BACKGROUND OF THE INVENTION

It is well known to use the Mond process for the extraction of nickel from ores, mattes, residues, or similar compounds containing nickel, in which such compounds are reduced to yield finally divided metallic nickel, which is then treated with carbon monoxide to produce nickel carbonyl that can then be decomposed to yield pure nickel. Various improvements to this process have been suggested to increase the rate of nickel carbonyl production and thus render the overall process more economical. For example, in Canadian Patent No. 322,887 it is suggested to add to the reaction chamber producing nickel carbonyl, a compound containing sulphur, selenium or tellurium in active form, such as nickel sulphide, nickel selenide or nickel telluride and carrying out the carbonylation reaction in the absence of oxygen. The preferred additive is nickel sulphide and it is added so that the amount of active sulphur in the reaction chamber lies between 0.2% and 5% by weight. It, therefore, acts as a catalyst to promote the carbonylation reaction.

In U.S. Patent No. 4,045,541 another improvement is disclosed according to which a metal, such as iron, copper or cobalt, which forms sulphides more easily than nickel at 200°C, is admixed with the material comprising elemental nickel, such as nickel oxide, which is then subjected to carbonylation and sulphidation.

British Patent No. 649,988 discloses a process for the manufacture of nickel carbonyl by reacting an aqueous solution of a nickel salt, such as nickel chloride or nickel sulphate, with an alkaline reacting substance, producing a nickel compound which is treated in aqueous solution or suspension with carbon monoxide under super-atmospheric pressure of at least 50 atmospheres and at elevated temperatures of at least 70°C, and in the presence of a minor amount of nickel sulphide or cyanide as a catalyst.

All the above prior art processes require the presence of various additives or carbonylation catalysts and/or the use of super-atmospheric pressure and elevated temperature to achieve satisfactory rates of nickel carbonyl production.

There is thus a need for a simplified production of nickel carbonyl from nickel salts.

### OBJECTS AND SUMMARY OF THE INVENTION

It is an object of the present invention to produce active nickel powder by reducing feed materials containing nickel chloride and/or other reducible nickel salts, such that the active powder is capable of reaction with a gas containing carbon monoxide to yield nickel carbonyl. It is a further object of the present invention to produce active nickel powder by reducing feed materials containing one or more reducible nickel salts with a reducing gas containing both hydrogen and hydrogen chloride such that the active powder is capable of reaction with a gas containing carbon monoxide to yield nickel carbonyl. It is yet a further object of the present invention to transform the produced active nickel powder into nickel carbonyl at rapid and commercial rates without addition of carbonylation catalysts or promoters, such as used in the prior art.

Other objectives and advantages of the present invention will become apparent from the following description thereof.

In essence, it has been found that an active nickel powder can be made by reducing a feed material containing one or more reducible nickel salts, optionally comprising nickel chloride, having a surface area in excess of 1 m²/g, with a reducing gas containing preferably at least 20 volume per cent hydrogen, at a temperature between about 300°C and 600°C, by either (a) including nickel chloride in the feed material such that the weight ratio of chloride to total nickel is greater than 0.1, or (b) adding hydrogen chloride directly to the reducing gas. The resulting activated nickel powder can then be reacted with a gas containing CO at atmospheric pressure at temperatures of 20°C to 100°C to produce nickel carbonyl {Ni(CO)₄}, with high yield, preferably close to 100%. The active nickel powder can also be reacted with a gas containing CO at super-atmospheric pressure and elevated temperature, if desired. The carbonylation reaction with a gas containing CO is simple and effective, requiring no catalysts or other promoters.

When other reducible nickel salts, for example nickel carbonate, nickel hydroxide or nickel sulphate are treated in the same manner, namely by reduction with a gas containing H₂ at 300°C - 600°C, the nickel powder produced is essentially inactive. However, surprisingly, when such reducible nickel salts are admixed with nickel chloride or treated with HCI gas such that the weight ratio of chloride to total nickel is greater than 0.1 and the reducible nickel salts have a surface area in excess of 1 m²/g, the entire admixture reduces to an active nickel powder. For example, nickel extraction from reduced nickel carbonate is typically about 10 wt % after five hours but nickel extraction from an admixtures of NiCO₃ and NiCl₂ or from NiCO₃ with 1-5 volume per cent hydrogen chloride directly added to reduction gas-, are in the range of 95-100%. Extractions obtained with admixtures including NiSO₄ are usually slightly lower, but still in a very appreciable range of 85-90%, probably due to the formation of some nickel sulphide, which does not carbonylate.

When reference is made to reducible nickel salts and nickel chloride, it is to be understood that these salts can be either in the anhydrous form or in the form of hydrates, such as NiCl₂.6H₂O. Moreover, when reference is made to reducible nickel salts, they can also be combined with other nickel compounds, such as nickel hydroxide, as in the compound called zaratite - 2Ni(OH)₂.NiCO₃.4H₂O.

The starting feed material to be reduced to nickel powder should have a high surface area in excess of about 1 m²/g, and preferably between 35 and 100 m²/g.

Those skilled in the art will appreciate that the feed material containing nickel chloride and one or more reducible nickel salts, in which the weight ratio of chloride to total nickel is greater than 0.1 and the reducible nickel salts have a surface area in excess of 1 m²/g, can be made by mixing together the dry components, or by wet mixing in the presence of water, reducible nickel salts and other soluble metal chloride salts (for example CrCl₃, FeCl₃, FeCl₂) and then removing the water by drying, or by adding hydrochloric acid to an excess of reducible nickel salts and then removing the water by drying, or by adding alkali (for example sodium carbonate) to a solution of reducible nickel salts, which includes nickel chloride, and then removing the water by drying. Those skilled in the art will recognize that mixing the soluble components of the feed material in water will allow nickel chloride to be formed by metathesis (exchange of anions). For example, mixing nickel carbonate and chromium chloride produced some nickel chloride and chromium carbonate in the admixture after drying. Drying of the wet feed material can be an integral part of reduction with gas containing at least 20 volume % hydrogen or it can be done as a separate step prior to reduction. It has been found that the beneficial effect of the hydrogen chloride gas given off during reduction of a feed material containing both reducible nickel salts and reducible metal chlorides (for example NiCl₂) can also be obtained by adding hydrogen chloride gas directly to the reducing gas preferably in an amount equivalent of that produced by reducing nickel chloride as described above. It has been found that when hydrogen chloride gas is added directly to the reducing gas in this way it is not necessary to add nickel chloride to the feed material to make active nickel although the present invention also contemplates the addition of nickel chloride.

Active nickel powder produced in accordance with the present invention can be maintained indefinitely under inert gas, such as argon. A useful feature of this powder is that if the active nickel powder loses, or partly loses its activity due to storage in the absence of oxygen, it can be re-activated by exposing it to a gas containing H₂ at a temperature above about 150°C. If the active nickel powder loses its activity due to storage in the presence of oxygen, it can be conveniently re-activated by exposing it to a gas containing H₂ at a temperature of about 150°C to 600°C. This is an important advantage of the present invention since it enables the carbonylation reaction to be performed completely separately and even at a different location from the reduction reaction that produces the active nickel powder.

### BRIEF DESCRIPTION OF THE DRAWINGS

Fig. 1 is a graph showing nickel extraction from active nickel powder produced by reduction of nickel chloride hydrate;

Fig. 2 is a graph showing nickel extraction from active nickel powder where treatments were made on various materials containing NiCl₂ at different temperatures;

Fig. 3 is a graph showing nickel extraction from nickel powder produced by reduction of nickel carbonate only with no nickel chloride present;

Fig. 4 is a graph showing nickel extraction from active nickel powder produced by reduction of an admixture of and nickel carbonate and nickel chloride.

Fig. 5 is a graph showing nickel extraction at super-atmospheric pressure and elevated temperature from active nickel powder of the present invention (F) as compared to regular nickel powder of the prior art (G).

Fig. 6 is a graph showing the nickel extraction from active nickel powder produced by reduction of nickel carbonate with a reducing gas to which hydrogen chloride gas has been directly added.

Fig. 7 is a graph showing nickel extraction from active nickel powder (H) produced by reduction of an admixture of nickel carbonate and chromium chloride produced by first wet mixing the nickel carbonate and chromium chloride and then drying the wet mixture at 110°C to remove water, and nickel extraction from nickel powder (I) produced by reduction of a dry admixture of dry nickel carbonate and dry chromium chloride.

Fig. 8 is a graph showing nickel extraction from active nickel powder (K) produced by reduction of an admixture of nickel carbonate and nickel chloride produced by first wet mixing the nickel carbonate and nickel chloride and then drying the wet mixture. The graph also shows carbonylation extraction of active nickel after additions of 1 wt % of CrCl₃ (J), FeCl₂ (M) and FeCl₃ (L) metal chlorides to the wet admixture of nickel carbonate and nickel chloride.

### DETAILED DESCRIPTION OF THE INVENTION

Examples of preferred, but non-limiting, embodiments will now be described with reference to the appended drawings. In these examples, tests were carried out by first reducing a pre-dried small sample (25mg) of finely divided (1) nickel chloride and of (2) nickel carbonate and (3) nickel carbonate in admixture with nickel chloride. This feed was reduced in hydrogen at 500°C, the resulting active nickel powder was then further cooled to 200°C and the reactive gas switched from hydrogen to carbon monoxide at a flow rate of 10ml/min. The sample was then further cooled to 50°C. Weight loss was monitored over time using appropriate computercontrolled measurement. The weight loss was confirmed with TGA (thermogravimetric analysis) measurements, and the residue was dissolved in acid and analysed for nickel to give a complete mass balance. The obtained nickel metal powder reacted with CO to form volatile nickel carbonyl gas, which was removed and decomposed at high temperature into a pure nickel product as is known in the art.

Whenever use herein, the term "about" can afford a deviation of ±20% of the absolute value being described or claimed, without departing from the scope of this invention.

### EXAMPLE 1

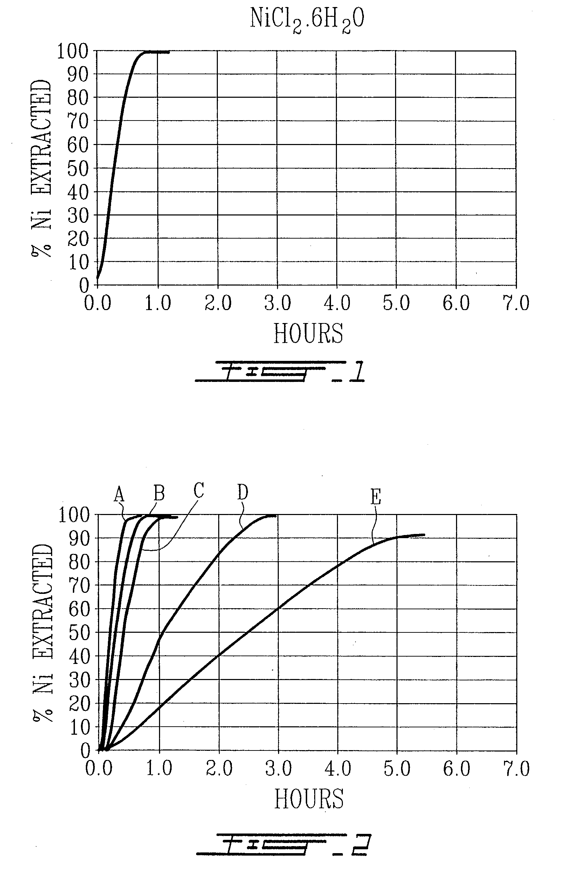

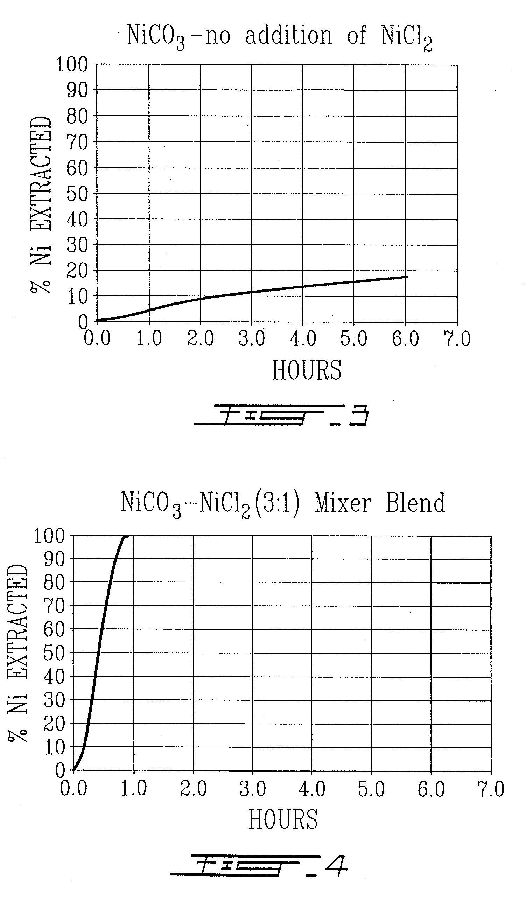

In this example, NiCl₂.6H₂O was pre-dried at 170°C in air. This feed was reduced in hydrogen at 500°C and the resulting nickel powder was then further cooled to 200°C. The reactive gas was switched from hydrogen to carbon monoxide at a flow rate of 10ml/min and the nickel powder was then further cooled to 50°C. Carbonylation extraction of the nickel powder was carried out in CO gas at 50°C. Nickel extraction of 99.6% was obtained in 45 minutes as illustrated by the curve in the graph of Fig. 1 and by curve B in the graph of Fig. 2.

The same procedure as above was repeated with a sample of NiCl₂ pre-dried at 300°C in N₂. Nickel extraction of essentially 100% was obtained in about 30 minutes as illustrated by curve A in the graph of Fig. 2.

The same procedure was repeated with another sample of NiCl₂ pre-dried at 170°C in air. Nickel extraction of essentially 100% was obtained in about one hour as illustrated by curve C in the graph of Fig. 2.

The same procedure was repeated but using a temperature of 600°C - 800°C for reduction in hydrogen. In this case, essentially full extraction was reached after about 2.5 hours, as illustrated by curve D in the graph of Fig. 2. This shows that temperatures higher than 600°C actually slow down the extraction and there is no practical reason to use them. The present invention is, however, not limited to temperatures below 600°C.

The same procedure was repeated using anhydrous NiCl₂ without pre-drying. In this case, only about 90% of extraction was achieved after about 5 hrs, as illustrated by curve E in the graph of Fig. 2.

The above experiments indicate that changes in drying temperature, hydrogen reduction temperature, and in the composition of the nickel chloride may lead to variations in extraction rates and the time required to achieve the desired extraction.

### EXAMPLE 2 (COUNTER EXAMPLE)

In this example, the feed production procedure described in example 1 was repeated but using NiCO₃ only without nickel chloride addition as the starting material. This feed was reduced to nickel powder as described above and then carbonylation extraction of the nickel powder was carried out in CO gas at 50°C.

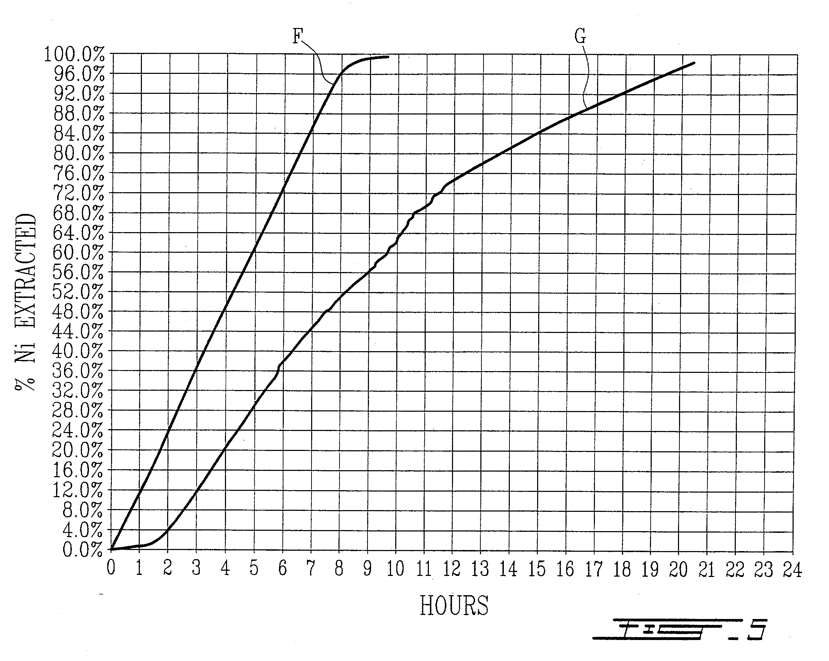

As shown by the curve in the graph of Fig. 3, a very low extraction of less than 20% was achieved after about 6 hours. It is obvious, therefore, that reduction of NiCO₃ alone did not produce an active nickel powder.

### EXAMPLE 3

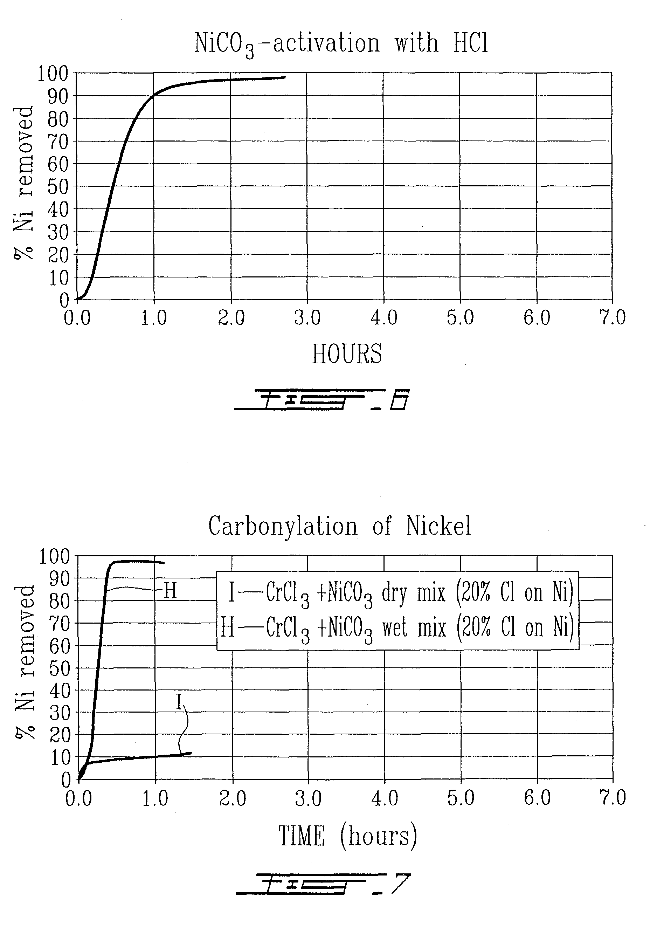

The procedure of Example 2 was repeated but with replacement of the starting material with a mixture of NiCO₃ and NiCl₂ in a proportion of 3:1. This feed was reduced to nickel powder as described above and carbonylation extraction of the nickel powder was carried out in flowing CO gas at 50°C. Essentially 100% of the nickel was extracted in less than one hour as shown by the curve in the graph of Fig. 4.

Other amounts of mixture blends of nickel carbonate and nickel chloride were tested and satisfactory results were obtained starting with about 5% by weight of NiCl₂ in the mixture. Increasing the proportion of NiCl₂ resulted in a more complete extraction of nickel and increasing the surface area of the mixed solids resulted in a faster extraction of nickel. Thus, the presence of NiCl₂ in admixture with other nickel salts, including possible other compounds that may be present during production of such salts (for example sodium chloride, calcium chloride, magnesium chloride, sodium carbonate, nickel sulphate and calcium sulphate), produces a satisfactory and rapid conversion of the total nickel present in such mixtures into active nickel.

Larger scale atmospheric carbonylation tests, using feed quantities up to 500g, have also been carried out and gave similar results as those described in the above examples. However, in this larger equipment extractions from active nickel typically required times of 3 to 6 hours, which was considerably less time than required for extraction from regular nickel powder.

### EXAMPLE 4

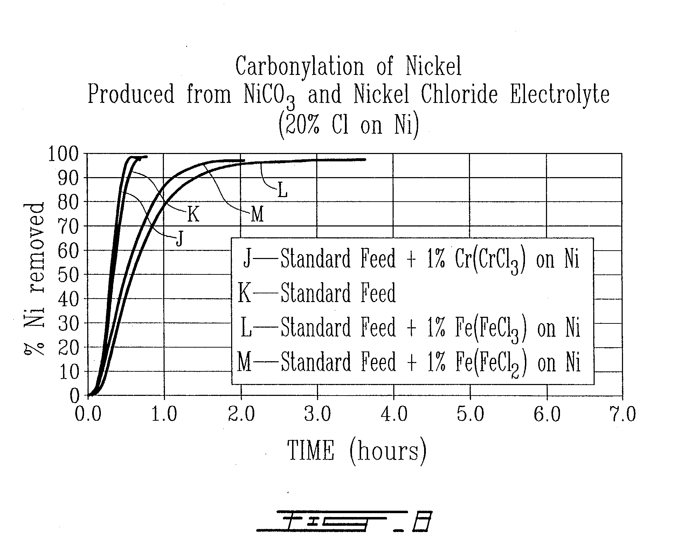

A 300g sample of active nickel powder produced in accordance with the present invention was subjected to pressure carbonylation with CO gas in a small vertical reactor at 300 psi (20 atm) and 85°C. Essentially 100% of the nickel was extracted in less than 10 hours, as shown by curve F in Fig. 5.

For comparison, a 300g sample of non-activated nickel powder was treated in the same manner with CO gas at 300 psi and 85°C. Extraction of nickel from non-activated nickel powder required over 20 hours, as shown by curve G in the Fig. 5.

As previously mentioned, it is already known in the art that nickel can be extracted by carnonylation with CO gas at super-atmospheric pressures and at elevated temperatures above 70°C. The present example shows that when such known carbonylation is carried out using the active nickel powder of the present invention, a considerable reduction in the time required for nickel extraction is achieved.

### EXAMPLE 5

In this example, the feed production procedure described in example 2 was repeated. This feed was reduced to nickel powder in 20 minutes at 500°C but 1-2 volume per cent HCl gas was added to the hydrogen used for reduction. Carbonylation extraction of the resulting active nickel powder was carried out in flowing CO gas at 50°C. As shown by the curve in the graph of Figure 6, 98% of the active nickel was extracted in less than three hours.

### EXAMPLE 6

In this example nickel chloride was not added to the feeds which were prepared by both the wet-mix and the dry-mix methods. For the wet-mix, an admixtures of water, nickel carbonate and chromium chloride was stirred together and then dried 110°C to remove all the free water. Both wet and dry admixtures were reduced in hydrogen gas at 450°C. Carbonylation extractions of the resulting nickel powders were carried out in CO gas at 50°C.

As shown by the curves in the graph of Fig. 7, 97.6% (H) of the nickel was extracted in less than one hour from wet mixed feed compared to only 10% (I) of the nickel extracted from the dry mixed feed in the same period. As described above the wet mixing is thought to allow the formation of nickel chloride in the wet admixture by metathesis reaction in solution (exchange of anions).

### EXAMPLE 7

A feed material was made by wet mixing nickel carbonate and nickel chloride electrolyte such that the chloride to total nickel weight ratio was 0.2 and this was divided into four samples. As shown by the curves in the graph of Fig. 8, additions of 1 weight % chromic chloride (J), ferric chloride (L) and ferrous chloride (M) were separately made to three samples. The fourth sample (K) was the same feed as the three other samples but without additive. Feeds were reduced in hydrogen at 500°C and the resulting nickel powder was then further cooled to 200°C. The reactive gas was switched from hydrogen to carbon monoxide at a flow rate of 10ml/min and the nickel powder was then further cooled to 50°C. Carbonylation extraction of the nickel powder was carried out in CO gas at 50°C. Iron chlorides slowed the nickel extraction slightly but chromium did not.

It should be noted that the invention is not limited to the specific embodiment and examples described above, but that various modifications obvious to those skilled in the art can be made without departing from the invention and the following claims.

## Claims

1. A method of producing an active nickel powder, said method comprising the steps of :
a) providing a feed material comprising nickel chloride wherein the feed material has a surface area in excess of about 1 m²/g, preferably between 35 and 100 m²/g;
b) reducing said feed material with a reducing gas at a temperature of at least about 300°C, and
c) recovering the resulting active nickel powder.

2. A method of producing an active nickel powder, said method comprising the steps of :
a) providing a feed material comprising nickel chloride and other reducible nickel salts, such as nickel carbonate, nickel sulphate and nickel hydroxide, wherein the weight ratio of chloride to total nickel is greater than 0.1 and wherein the feed material has a surface area in excess of about 1 m2/g; preferably between 35 and 100 m²/g;
b) reducing said feed material with a reducing gas at a temperature of at least about 300°C, and
c) recovering the resulting active nickel powder.

3. A method of producing an active nickel powder, said method comprising the steps of :
a) providing a feed material comprising reducible nickel salts, such as nickel carbonate, nickel sulphate and nickel hydroxide, and optionally nickel chloride, and wherein the feed material has a surface area in excess of about 1 m²/g, preferably between 35 and 100 m²/g;
b) reducing said feed material with a reducing gas at a temperature of at least about 300°C and concurrently contacting said feed material with HCI gas so as convert at least a portion of the reducible nickel salts feed material to nickel chloride and wherein the resulting ratio of chloride to total nickel is greater than 0.1, and
c) recovering the resulting active nickel powder.

4. A method of producing an active nickel powder, said method comprising the steps of :
a) providing a feed material comprising reducible nickel salts, such as nickel carbonate, nickel sulphate and nickel hydroxide, and optionally nickel chloride, mixed with other soluble metal chloride salts, such as CrCl₃, FeCl₃, FeCl₂, wherein the weight ratio of chloride to total nickel is greater than 0.1 and wherein the feed material has a surface area in excess of about 1 m²/g, preferably between 35 and 100 m²/g;
b) reducing said feed material with a reducing gas at a temperature of at least about 300°C, and
c) recovering the resulting active nickel powder.

5. A method of producing nickel carbonyl, said method comprising the steps of:
a) providing a feed material comprising nickel chloride wherein the feed material has a surface area in excess of about 1 m²/g, preferably between 35 and 100 m²/g;
b) reducing said feed material with a reducing gas at a temperature of at least about 300°C;
c) contacting the resulting active nickel powder with a gas containing carbon monoxide at atmospheric or super atmospheric pressure to obtain nickel carbonyl.

6. A method of producing nickel carbonyl, said method comprising the steps of:
a) providing a feed material comprising nickel chloride and other reducible nickel salts, such as nickel carbonate, nickel sulphate and nickel hydroxide, wherein the weight ratio of chloride to total nickel is greater than 0.1 and wherein the feed material has a surface area in excess of about 1 m²/g, preferably between 35 and 100 m²/g;
b) reducing said feed material with a reducing gas at a temperature of at least about 300°C, and
c) contacting the resulting active nickel powder with a gas containing carbon monoxide at atmospheric or superatmospheric pressure to obtain nickel carbonyl.

7. A method of producing nickel carbonyl, said method comprising the steps of:
a) providing a feed material comprising reducible nickel salts, such as nickel carbonate, nickel sulphate and nickel hydroxide, and optionally nickel chloride, and wherein the feed material has a surface area in excess of about 1 m²/g, preferably between 35 and 100 m²/g;
b) reducing said feed material with a reducing gas at a temperature of at least about 300°C and concurrently contacting said feed material with HCI gas so as convert at least a portion of the reducible nickel salts feed material to nickel chloride and wherein the resulting ratio of chloride to total nickel is greater than 0.1, and
c) contacting the resulting active nickel powder with a gas containing carbon monoxide at atmospheric or superatmospheric pressure to obtain nickel carbonyl.

8. A method of producing nickel carbonyl, said method comprising the steps of:
a) providing a feed material comprising reducible nickel salts, such as nickel carbonate, nickel sulphate and nickel hydroxide, and optionally nickel chloride, mixed with other soluble metal chloride salts, such as CrCl₃, FeCl₃, FeCl₂, wherein the weight ratio of chloride to total nickel is greater than 0.1 and wherein the feed material has a surface area in excess of about 1 m²/g, preferably between 35 and 100 m²/g;
b) reducing said feed material with a reducing gas at a temperature of at least about 300°C, and
c) contacting the resulting active nickel powder with a gas containing carbon monoxide at atmospheric or superatmospheric pressure to obtain nickel carbonyl.

9. The method of any one of claims 1 to 8 wherein said reducing step b) is performed at temperatures between 300°C and 600°C.

10. The method of any one of claims 5 to 8 wherein step c) is performed at temperatures between 20°C and 100°C.

11. The method of any one of claims 1 to 10 wherein step a) is performed by mixing together dry components.

12. The method of any one of claims 1 to 10 wherein step a) is performed by wet mixing components and then removing the water by drying.

13. The method of any one of claims 1 to 10 wherein step a) is performed by wet mixing components in the presence of HCl.

14. The method of any one of claims 1 to 10 wherein step a) is performed by adding alkali, such as Na₂CO₃, to an aqueous solution of reducible nickel salts, including nickel chloride, and then removing the water by drying.

15. The method of any one of claims 1 to 14 wherein the reducing gas in step b) contains hydrogen.

16. The method of any one of claims 12 to 15 wherein the drying portion of steps a) and the reducing portion of step b) are conducted concurrently.

17. The method of any one of claims 12 to 15 wherein steps a) and b) are conducted sequentially.

18. The method of any one of claims 1 and 5 wherein in step a), said nickel chloride is in the form of hydrates of nickel, such as NiCl₂.6H₂O.

19. Method according to any one of claims 1 to 18, wherein if the active nickel powder becomes de-activated due to storage in the absence of oxygen at the end of the process of claims 1 to 4 or after step b) in claims 5 to 8, it is re-activated by exposing it to gas containing H₂ at a temperature of at least about 150°C.

20. Method according to any one of claims 1 to 18, wherein if the active nickel powder becomes de-activated due to storage in the absence of oxygen, it is re-activated by exposing it to gas containing H₂ at a temperature between 150°C and 600°C.

21. Method according to claim 1 wherein in step a), the weight ratio of chloride to total nickel is grater than 0.1.
